# EUROPEAN PATENT APPLICATION

(11) **EP 4 718 744 A1**
(43) Date of publication of application: **01.04.2026**
(21) Application number: 25203784.1
(22) Date of filing: 22.09.2025
(51) Int. Cl.: H04B 10/00

(54) **SYSTEM, METHOD, AND DEVICE FOR HYBRID PHASE DELAY**

(30) Priority: 27.09.2024 US 202463700272 P
(71) Applicant: MacDonald, Dettwiler and Associates Corporation, Ste-Anne-de-Bellevue, QC H9X 3R2 (CA)
(72) Inventor: RIEL, Mathieu, Quebec (CA); GLÂTRE, Karim, Quebec (CA); AHMED, Khaled Yehia Salem Morsy, Quebec (CA)
(74) Representative: Mewburn Ellis LLP

(57) **Abstract**

Systems and methods for beam forming are provided. The system includes an optical beam forming network (OBFN), one or more optical to radio frequency conversion units, and an analog beamforming network (ABFN). The OBFN forms a beam in the optical domain and includes an optical delay module for providing a true time delay in the optical domain to an optical signal received by the OBFN to introduce a coarse delayed optical signal. The optical to radio frequency (RF) conversion units convert the coarse delayed optical signal from the optical domain to the RF domain to obtain a coarse delayed RF signal. The ABFN forms a plurality of phase-shifted signals and provides the phase-shifted signals to corresponding array elements of an array system. The ABFN includes an analog delay module configured to provide at least one fine phase shift to the coarse delayed analog signal to obtain the delayed signals.

## Description

### Technical Field

The following relates generally to delays of signals and specifically to phase delaying signals of a phased array.

### Introduction

A phased array is implemented with individual elements of the array emitting a signal delayed in phase relative to the signal emitted by other elements of the array. Controlling the relative phase delays of these emitted signals controls the direction the array is pointing. The phase delay of each emitting element is controlled independently and dynamically by a beam forming network (BFN) to control and adjust the direction the array is pointing.

The quality of the signal is dependent on the accuracy of these delays. For example, it is desirable for the delay to be accurate on the order of 1ps for a Ka Band application. Errors in delay can lead to interference between the signals of different elements. The directional accuracy of the signal can also be negatively affected by the errors in the delay.

In some existing systems, the delays are provided in the optical domain, i.e. using an optical BFN (OBFN). In these systems, to obtain desired delay accuracies substantial, often untenable, resources are allocated particularly at high frequencies. Some existing systems use optical ring resonators (ORRs) to provide the delay. The ORRs can introduce variable delays via changing size or coupling coefficient which affects the delay of the optical signal. The introduced delay results in an actual delay to the signal and the resulting delay is a true time delay (TTD). However, ORRs are hard to control and operate, particularly when cascaded in large numbers for example to implement a large optical beam forming network. ORRs operate by adjusting heaters that control the delay interval and the operating wavelength. The adjustments are continuously monitored, tuned, and calibrated to operate at the desired wavelength and apply a specific delay at a desired accuracy. The quantity of control lines, analog-to-digital converters (ADCs), and digital-to-analog converters (DACs) that provide these functions complicates the design of the photonic integrated circuit (PIC), its packaging, and the surrounding control circuits. ORRs also are very susceptible to manufacturing variability and thermal cross-talks which add ambiguity to the PIC and increases control challenges. It will be appreciated that, when operating at higher frequencies, the constraints on time delay errors becomes tighter for the same phase error.

In some existing systems, the delays are provided in the digital domain. In an example, the signal is digitized and processed and transmitted in the digital domain. The signal is multiplied by specific weights that approximate the effects of delays. The weights provide delays that are inconsistent over all frequency components of the signal and are not considered TTDs. The corresponding distortion suffered by the signal may be known and is referred to herein as beam squinting. Delays in the radiofrequency (RF) domain result in significant squinting over frequency, for example when scanning a Direct Radiating Array (DRA).

Accordingly, there is a need for an improved system and method for delaying element signals of a phased array that overcomes at least some of the disadvantages of existing systems and methods.

### Summary

A system for hybrid beam forming is provided. The system includes an optical beam forming network (OBFN) configured to form a beam in the optical domain, the OBFN comprising an optical delay module configured to provide a true time delay (TTD) in the optical domain to an optical signal, modulated with an RF signal, and received by the OBFN to obtain a coarse delayed optical signal, one or more optical to radio frequency (RF) demodulator units configured to demodulate the RF signal from the coarse delayed optical signal to obtain a coarse delayed RF signal, and an analog beam forming network (ABFN) configured to form a plurality of phase-shifted signals and provide the delayed signals to corresponding array elements of an array system, the ABFN comprising an analog delay module configured to provide at least one fine delay to the coarse delayed RF signal to obtain the delayed signals.

The hybrid beam forming network may further comprise an upstream splitter configured to split the optical signal, wherein the optical delay module comprises a plurality of delay lines, each delay line configured to receive a split optical signal output from the splitter and provide a TTD to the received split optical signal independently from TTD provided by the remaining delay lines.

The optical delay module may comprise a series of delay units, each delay unit configured to provide a fixed delay and including a delay element configured to receive the optical signal and provide a corresponding delay to the optical signal, a bypass configured to bypass the delay element, and a switch, wherein the switch, in a delay configuration, directs the optical signal through the corresponding delay element for providing the corresponding delay to the optical signal, and, in a bypass configuration, directs the optical signal through the bypass for bypassing the corresponding delay element, and wherein each switch is independently controllable for toggling between the delay and bypass configurations to affect a desired total delay of the series of delay units.

The delay unit may be a spiral delay unit.

The hybrid beam forming network may further comprise an optical conversion unit configured to convert a received RF signal into the optical domain to obtain the optical signal.

The optical conversion unit may further comprise a laser source configured to provide an optical carrier signal to an optical modulator, the optical modulator configured to receive an input signal and modulate the optical carrier signal based on the input signal to obtain the optical signal, wherein the optical signal carries the input signal.

The optical modulator may comprise a Mach-Zehnder Modulator (MZM).

The laser source may be a laser comb.

At least one of the optical to RF units may be a photodiode.

The analog delay module may further comprise at least one downstream splitter configured to split the coarse delayed optical signal and the coarse delayed RF signal to obtain a plurality of split coarse delayed signals, and a plurality of analog beam formers, each analog beam former configured to receive a split coarse delayed RF signal corresponding to one of the split coarse delayed signals, and to provide a desired fine phase-shift of the plurality of fine delays to the received split coarse delayed RF signal independently from the remaining analog beam formers wherein the analog beam former is variable to provide the desired fine phase-shift selected from a fine phase range of the analog beam former.

At least one of the optical to RF units may be communicatively disposed between the splitter and an analog beam former of the plurality of analog beam formers.

The optical delay module may further comprise a demultiplexer configured to demultiplex a multi-wavelength optical signal comprising a plurality of wavelength components of a plurality of respective wavelengths into a plurality of respective optical signals each compromising of a single wavelength component, and to provide each of the plurality of optical signals to a respective delay element, wherein the delay elements are configured to independently provide a TTD for each of the plurality of optical signals and a multiplexer configured to multiplex the plurality of optical signals into a delayed multiplexed optical signal comprising each of the plurality of wavelength components delayed according to the corresponding TTD.

At least one of the optical to RF units may be variable for selecting one of the plurality of delayed wavelengths according to a desired TTD and configured to convert the wavelength component corresponding to the selected wavelength to the coarse delayed RF signal.

The hybrid beam forming network may further comprise an optical modulator configured to receive an input RF signal and the delayed multiplexed optical signal and modulate the delayed multiplexed optical signal based on the input signal to obtain the optical signal, wherein each delayed wavelength component carries the input signal.

Each wavelength component of the multiplexed optical signal may be modulated and carry an input signal.

Provided herein is a method of beam forming. The method of beam forming comprises forming a beam in the optical domain with an optical beam forming network (OBFN), the forming including providing by an optical delay module a true time delay (TTD) in the optical domain to an optical signal received by the OBFN to obtain a coarse delayed optical signal, converting the coarse delayed optical signal from the optical domain to the RF domain to obtain a coarse delayed RF signal, and forming with an analog beamforming network (ABFN) a plurality of delayed signals and providing the delayed signals to corresponding array elements of an array system, the forming including providing by an analog delay module at least one fine delay to the coarse delayed analog signal to obtain the delayed signals.

Other aspects and features will become apparent to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a block diagram of an array system including a hybrid beamforming network, according to an embodiment;
Figure 2 is a block diagram of the optical-switch-based delay module of Figure 1, according to an embodiment;
Figure 3 is a schematic of a spiral delay line of Figure 2, according to an embodiment;
Figure 4 is a block diagram of an RF to optical unit of Figure 1, according to an embodiment;
Figure 5 is a block diagram of a switched hybrid array, according to an embodiment of the array system of Figure 1;
Figure 6 is a block diagram of a wave division multiplexer (WDM) based array, according to an embodiment of the array system of Figure 1; and
Figure 7 is a block diagram of a multi-beam WDM array, according to an embodiment of Figure 1.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

The following relates generally to systems and methods for delaying signals and specifically to a hybrid system and method for phase delaying signals of a phased array. The hybrid system is part of a hybrid beamforming network. The hybrid system provides a coarse TTD delay in the optical domain and a fine phase delay in the RF domain. Providing the delays in the two domains beneficially provides accuracy and simplifies the design while reducing squinting. The system is quasi-true time delay, in that for wide channels the squint effect due to phase error is limited as the fine delay is small compared to the total delay and may be provided by RF phase shifters. Furthermore, as the optical delay is coarse, the number of control lines is less compared to the full optical beam forming network of the same accuracy, in some embodiments by a factor of three per delay line. This beneficially reduces the number of bits controlling the optical switches to achieve the same order of delay over optical only systems. This hybrid solution retains most of the benefit of true time delay systems, and its performance is analytically verified for channels of 2GHz bandwidth scanned at 60 degrees.

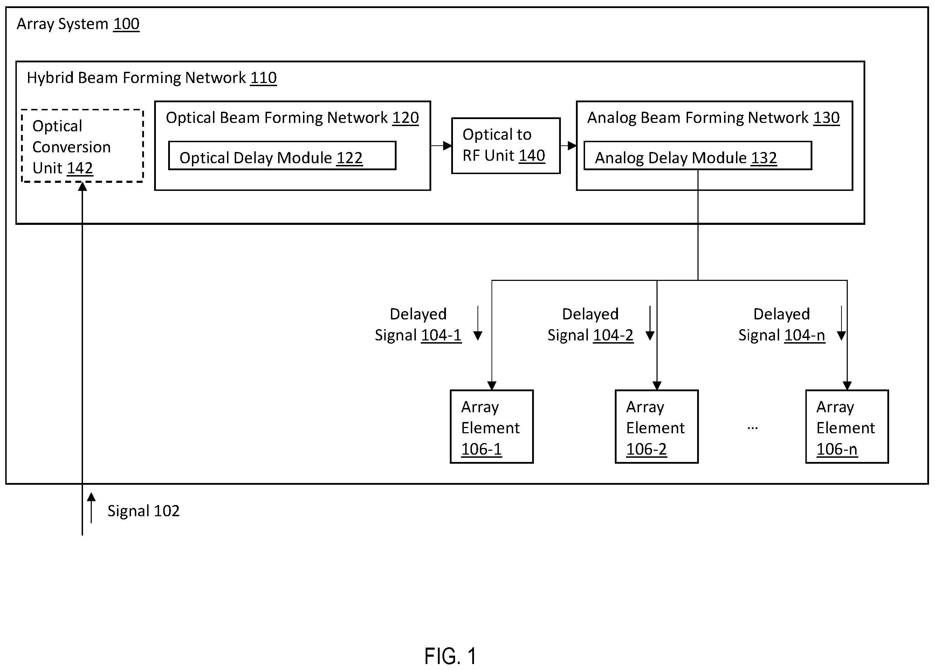

Referring to Figure 1, shown therein is an array system 100, according to an embodiment.

The array system 100 receives a signal 102 and provides delayed signals 104-1, 104-2, 104-n to a plurality of array elements 106-1, 106-2, 106-n. Each array element 106 is referred to generically as array element 106, specifically as 106-#, and collectively as array elements 106. The corresponding delay signals 104 are similarly referred to. A direction the array system 100 is pointing in is controlled by the collective and coordinated delays of the respective delayed signals 104. Accordingly, the precision with which each delay is controlled contributes to the pointing accuracy and the mitigation of squinting of the array system 100.

Signal 102 may be an optical signal or a radiofrequency (RF) signal. Signal 102 may be an optical signal that has been converted from an RF signal.

The array system 100 includes a hybrid beam forming network 110. The hybrid beam forming network 110 generates the delayed signals 104 from the signal 102. Specifically, hybrid beam forming network 110 splits the signal 102 into split signals (not shown) and delays each split signal to obtain the delayed signals 104.

The hybrid beam forming network 110 includes an optical beam forming network 120. The optical beam forming network 120 introduces TTDs in the optical domain.

The optical beam forming network 120 includes an optical delay module 122. The optical delay module 122 may be referred to as a true-time delay (TTD) module 122 or an optical TTD module 122. The optical TTD module 122 delays the split signals 102 in the optical domain. In an example, the optical TTD module 122 provides quantized coarse delay steps with a step size of 40 ps (i.e. has an order of 40 ps) across a range of zero to five hundred twenty picoseconds (ps). In some embodiments the optical TTD module 122 has a step size in the order of 70 or 80 ps. It will be appreciated that the optical delay module 122 is configured to provide coarse delays near but not necessarily at the desired total delay. Providing delays in the optical domain beneficially mitigates squinting by avoiding squinting corresponding the portion of the delay provided in the optical domain over existing systems that provide the full delay, including this portion, in the analog domain.

The hybrid beam forming network 110 includes an analog beam forming network 130. The Analog beam forming network 130 introduces phase shifts in the RF domain.

The analog beam forming network 130 includes an analog delay module 132. The analog delay module 132 provides delays in the RF domain. The analog delay module provides the delay via analog phasing. In some embodiments, the analog delay is tunable across the step size of the corresponding optical delay module 122. Returning to the above example, the analog delay is tunable across a 40 ps range. Providing a delay in the range of the optical delay module 122 step size beneficially avoids squinting attributable to applying phase delays greater than the step size.

The analog delay module 132 applies fine delays to the signal. Applying a portion of the total delay in the analog domain beneficially facilitates desired accuracies and enables balancing squinting reduction with costs associated with smaller optical beam forming step sizes, further described below. In an example, the array system 100 is applied in a Ka band application and the analog phase delays applied has a delay error in the order of 1 ps.

The hybrid beam forming network includes an optical to RF unit 140. The optical to RF unit 140 converts the optical output of the optical beam forming network 120 into the RF domain. In some embodiments, the optical to RF unit 140 is a photo diode (PD) and is referred to as photo diode 140 or PD 140.

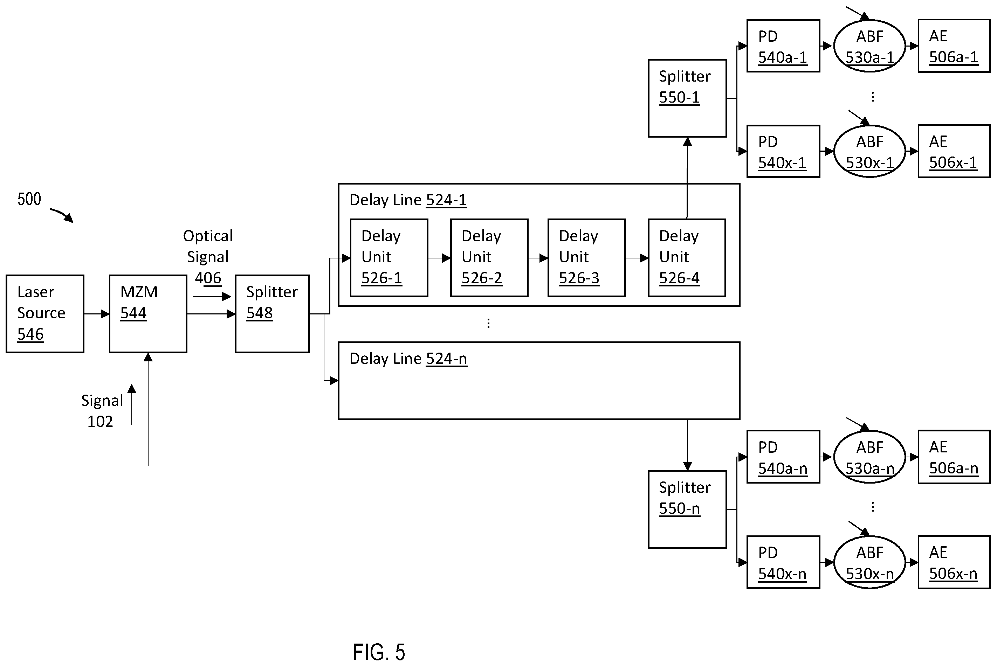

The optical to RF unit 140 receives the output from the optical beam forming network 120 and provides it to the analog beam forming network 130. In some embodiments, such as the embodiment shown in Figure 5, the output of the optical beam forming network is split into multiple signals with varying delays and provided across a corresponding line. In such embodiments, each line may have a corresponding optical to RF unit 140.

The hybrid beam forming network 110 may include an optical conversion unit 142. The optical conversion unit 142 converts the signal 102 to the optical domain. In an example, the signal 102 is in the RF domain and the optical conversion unit 142 is an RF to optical unit 142. In an embodiment where the input signal 102 is an optical signal, the optical conversion unit 142 is not necessary (as denoted by the dashed line box of optical conversion unit 142).

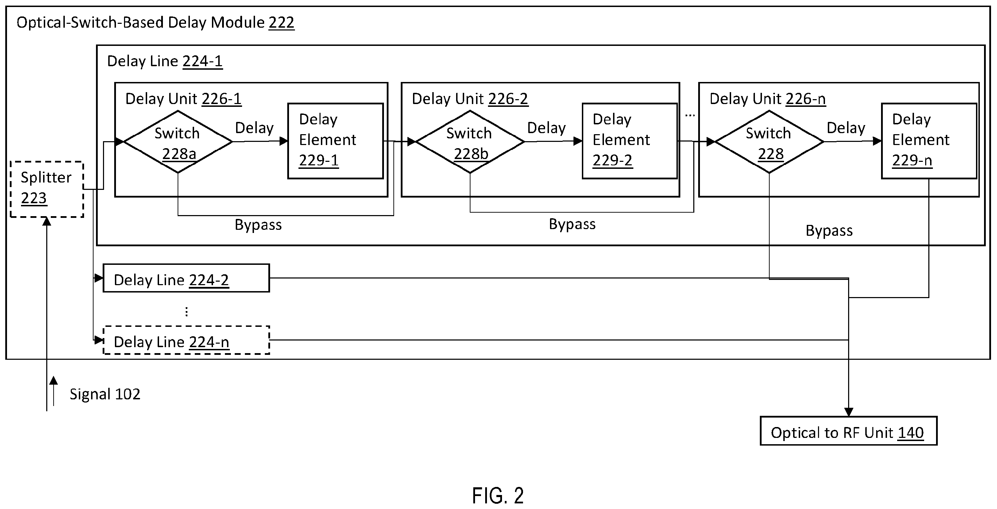

Referring to Figure 2, shown therein is a block diagram of a switched optical delay module 222, according to an embodiment.

The optical-switch-based delay module 222 may be an embodiment of the optical delay module 122 of Figure 1 and similarly configured.

Signal 102 is received by the optical-switch-based delay module 222 as an optical signal. Signal 102 may be an RF signal and, hence, requires conversion to an optical signal by a RF to optical conversion module before being received by optical-switch-based delay module 222.

The optical-switch-based delay module 222 includes delay lines 224-1, 224-2, 224-n. Delay lines 224 are referred collectively as delay lines 224, generically as delay line 224 and specifically as delay line 224-#.

The optical-switch-based delay module 222 may include any number of delay lines 224. Each delay line 224 is configured to apply a corresponding delay to the signal 102 of Figure 1 and provide the delayed signal to the optical to RF Unit 140. It will be appreciated that the delay of each delay line 224 is independent of the delay of the remaining delay lines 224. In some embodiments, the optical to RF unit 140 maintains the output of each delay line 224 separate. In some embodiments, each delay line 224 outputs to a corresponding optical to RF unit 140.

Each delay line includes a plurality of delay units 226. Delay units 226 are referred to collectively as delay units 226, individually as delay unit 226 and specifically as delay unit 226-#. Each delay unit 226 may be switched to either apply a delay of the delay unit 226 to the signal 102 or have the delay bypassed.

The value (tau) of the delay of a particular delay unit 226 varies from that of the delay of the remaining delay units 226 of the delay line 224. The delay units 226 are communicatively connected in series such that any applied delays are additive. The total value of the delay applied in optical domain for a particular delay line 224 corresponds to the sum of the delay values of the non-bypassed delay units 226 of the delay line 224.

Each delay unit 226-1, 226-2, 226-n includes a corresponding switch 228a, 228b, 228n respectively. The switch 228 may be referred to as an optical switch 228. The switch 228 can be configured in an on position for applying the delay of the delay unit 226. The switch 228 can be configured in a bypass position to bypass the delay of the delay unit 226. It will be appreciated that the switch may be operated (i.e. transitioned from the delay configuration to the bypass configuration or vice versa) fast enough to match a desired beam steering speed defined by the communication system. As the switch may be adjusted, the delay and corresponding pointing direction of the array 100 of Figure 1 is controllable.

Each delay unit 226-1, 226-2, 226-n includes a corresponding delay element 229-1, 229-2, 229-n, respectively. The delay element 229 applies the delay of the corresponding delay unit 226. The value of each delay element 229 may be different than the value of the remaining delay elements 229 of the same delay line 224. In an example delay element 229-1 applies a delay of tau and delay element 229-2 provides a 2 times tau. Continuing the example above, tau is 40 ps corresponding to the 40 ps step size of delay line 224-1 where delay element 229-1 has a delay value of 40 ps, and delay element 229-2 has a delay value of 80 ps.

Where the optical-switch-based delay module 222 includes more than one delay line 224 the switched optical delay module 222 includes a splitter 223. The splitter 223 splits the signal 102 to each of the delay lines 224.

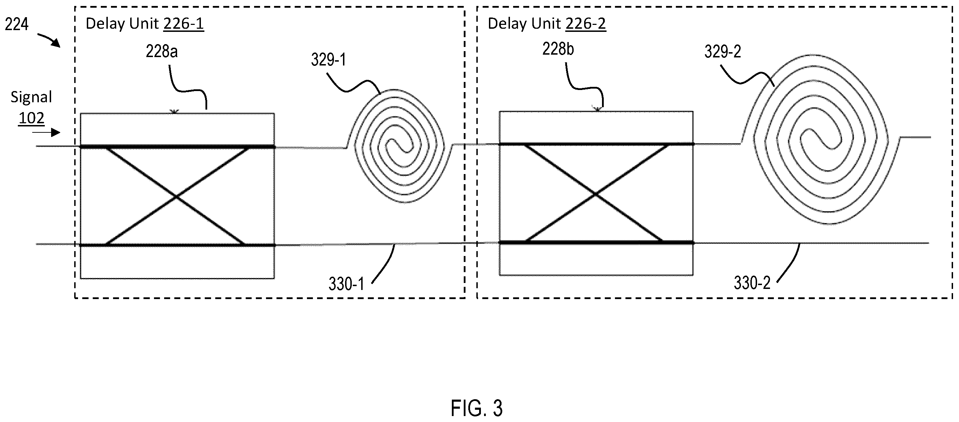

Referring to Figure 3, shown therein is a schematic of a spiral delay line 224, according to an embodiment.

The spiral delay line 224 includes two delay units 226-1 and 226-2 communicatively connected in series. Spiral delay lines 224 including any number of delay units 226 are expressly contemplated.

Delay unit 226-1 includes switch 228a. Where switch 228a is in the bypass configuration, the signal 102 is passed through bypass 330-1. Where switch 228a is in the delay configuration, the signal 102 is walked through spiral delay element 329-1. The spiral delay element 329-1 applies a delay of tau. The spiral delay element 329-1 is a waveguide with a specific length corresponding to the delay of delay element 329-1. Since the spiral length of the spiral delay element 329-1 is fixed by design, the delay line 224 can be implemented using a series of spirals 329 with different lengths, each representing a binary-weighted delay step. The fixed nature of the spiral delay element beneficially reduces the complexity of the system over variable delay elements such as ORRs.

Delay unit 226-2 includes switch 228b. Where switch 228b is in the bypass configuration, the delayed or passed signal 102 output from delay unit 226-1 is passed through bypass 330-2. Where switch 228b is the delay configuration, the delayed or passed signal 102 output from delay unit 226-1 is walked through spiral delay element 329-2 and delayed a delay of twice tau corresponding to the delay element 329-2. The optical switches may be controlled mainly digitally with minimal or no tuning. Tuning is minimized due to compensation from the analog phasing elements of the analog delay module 132 of Figure 1. Where tuning is desired, the tuning may be done digitally such as via pulse width modulator (PWM) control or a low-resolution (2-bits) DAC.

Tau and the amount of delay units 226 may be predetermined to configure the delay line to apply delays across a desired range by a desired step size. The step size may be based on desired squinting tolerance in the array 100 and costs associated with additional delay units including expense, space occupied, weight, heat, and power consumption.

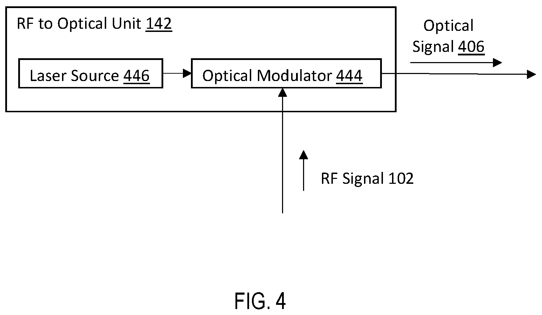

Referring to Figure 4, shown therein is a block diagram of an RF to optical unit 142, according to an embodiment.

The RF to Optical Conversion Unit 142 generates an optical signal 406. The optical signal 406 is the RF signal 102 modulated in the optical domain.

The RF to Optical Conversion unit 142 includes a laser source 446. The laser source provides an optical carrier signal to carry the RF signal 102. In some embodiments, RF to Optical Conversion unit 142 is communicatively connected to the optical delay module 122 of Figure 1. In some embodiments, the laser source 446 is a laser comb 446 and communicatively connected to the optical delay module 122 of Figure 1 such that the delays of the optical delay module are applied to the laser carrier signal prior to receiving the RF signal.

The RF to Optical Conversion unit 142 includes an optical modulator 444. The optical modulator 444 modulates the optical carrier signal based on a received input RF signal 102. The modulated optical carrier signal carries the RF signal 102 in one or more features of the optical carrier signal shaped according to the input signal. The optical modulator 444 may be a Mach-Zehnder Modulator (MZM).

Referring to Figure 5, shown therein is a block diagram of a switched hybrid array 500, according to an embodiment. The switched hybrid array 500, is an embodiment of the array 100 of Figure 1.

The switched hybrid array 500 includes a laser source 546. The laser source 546 provides an optic carrier signal to carry the RF signal 102. The laser source 546 is configured similarly to the laser source 446 of Figure 4.

The switched hybrid array 500 includes an MZM 544. The MZM 544 is configured similarly to the Optical modulator 444 of Figure 4.

The switched hybrid array 500 includes a splitter 548. The splitter 548 receives the optical signal 406 from the MZM 544 and splits the signal to each delay line 524-1 through 524-n of the array 500.

The array 500 includes any number of delay lines 524-1 through 524-n each configured similarly to delay line 224 of Figure 2. The delay lines 524 may include any number of delay units 526 similarly to the delay units 226 of Figure 2. It will be appreciated that each delay line may have the same or varying amounts of delay units 526 and that the delay value (tau) of the delay units may vary (or be consistent) across delay lines.

In some embodiments, as shown in Figure 5, the delay lines include four delay units 526-1 through 526-4. Each delay unit 526, in the delay configuration, applies a delay of a multiple of tau. In an example, tau is 40 ps and were configured in a delay configuration, delay unit 526-1 applies a delay of 40 ps, delay unit 526-2 applies a delay of 80 ps, delay unit 526-3 applies a delay of 160 ps, and delay unit 526-4 applies a delay of 240 ps. Each delay unit may be switched between a delay configuration and a bypass configuration to control the total accumulated delay of the delay line 524 ranging from 0 to 520 ps by 40 ps.

The array 500 includes splitters 550-1 through 550-n. Each splitter 550-# corresponds to a delay line 524-#. The splitters 550 split the signal delayed by the coarse optical delay of the corresponding delay line 524.

The array includes PDs 540a-1 through 540x-1, one for each signal from splitter 550-1. Each PD 540 converts the received signal from the optical domain to the RF domain. The array 500 includes a set of PDs 540a-# through 540x-# corresponding to each delay line 524-n. For example, the array includes PDs 540a-n through 540x-n corresponding to delay line 524-n.

In some embodiments, not shown, the PD 540 is disposed prior to the corresponding splitter 550. In these embodiments the splitter splits the signal in the RF domain instead of the optical domain.

The array includes analog beam formers (ABFs) 530a-1 through 530x-1, one for each signal from splitter 550-1. Each ABF 530 applies a fine phase shift to the signal received from PD 540. The fine phase shift of each ABF 530 is an analog phase delay independently controllable. In an example the array is used in a Ka band application and the ABFs 530 apply a delay with an error of less than 1ps.

The array 500 includes a set of ABFs 530a-# through 530x-# corresponding to each delay line 524-n. For example, the array includes ABFs 530a-n through 530x-n corresponding to delay line 524-n. The ABFs are collectively similarly configured to the analog beam forming network 130 of Figure 1.

The array 500 includes a set of array elements 506a-# through 506x-# corresponding to each delay line 524-n. For example, the array includes array elements 506a-1 through 506x-1 corresponding to delay line 524-n and array elements 506a-n through 506x-n corresponding to delay line 524-n. Each array element 506 receives a delayed signal from the corresponding ABF 530 for transmission.

Using the same coarse optical delay for a group of array elements 506-1 via a common output delay line 524-n split prior to the fine RF delay optimizes the array 500 by beneficially avoiding or reducing duplication of delay lines 524 providing the same optical delay. This reduction of duplication beneficially reduces array 500 architecture size (number of spirals and switches), and the power dissipation.

In an example, a 16x16 optical beam forming network of existing systems would include two hundred and fifty-six delay lines 524, each with nine delay units 526 (i.e. nine spirals and nine optical switches). Such an optical beam forming network would include a total of two thousand three hundred four delay units 526 (corresponding to the same number of spirals, and optical switches). The hybrid architecture of the array 500 would include sixteen delay lines 524 each with four delay units 526 or sixty four delay units total or less than 3% of that of the existing architecture. This reduction in delay units translates to a 3.136W dissipation (64x0.025 + 256x0.006) in the optical switches and the analog phasing elements compared to the 57.6W dissipation (2304x0.025) in the optical switches of the existing system.

The total of the optical delay provided by each delay line 524-1 and the ABF 530 corresponding to each array element 506 controls the pointing of the array 500. The accuracy provided by the ABF 530 supported by mitigation of squinting via the optical domain delay line 524 enables optimization of the balance between signal quality (i.e. less squinting) and cost associated with finer step sizes via additional delay units 526.

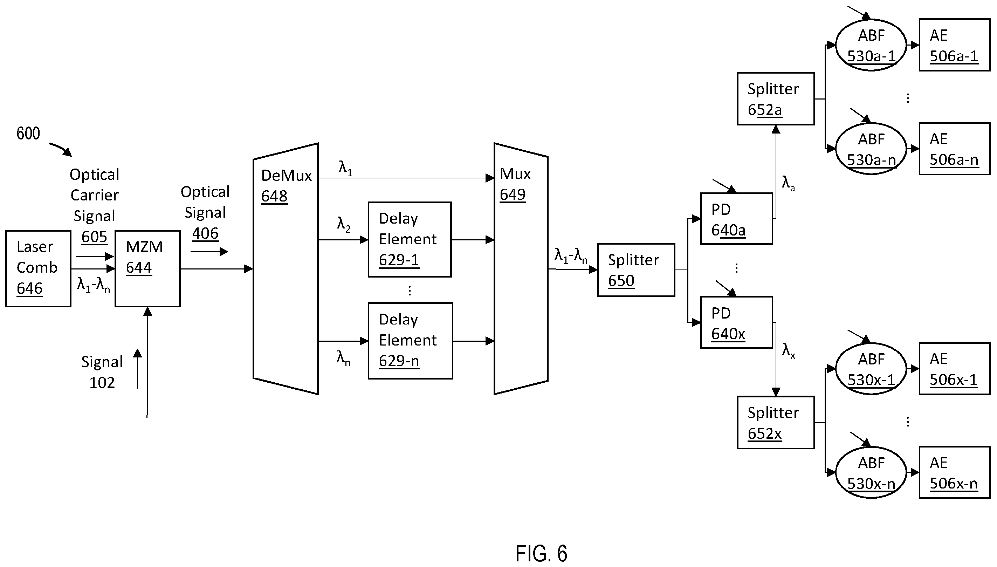

Referring to Figure 6, shown therein is a block diagram of a wave division multiplexing (WDM)-based hybrid beam forming network (HBFM) 600, according to an embodiment. The WDM HBFM 600 is an embodiment of the array 100 of Figure 1.

The WDM HBFM 600 includes a laser comb 646. The laser comb 646 is configured similarly to the laser source 446 of Figure 4. The laser comb 646 provides an optical carrier signal 605 of wavelengths λ₁-λₙ to MZM 644.

The WDM HBFM 600 includes MZM 644. The MZM 644 modulates the optical carrier signal 605 using the RF signal 102 to obtain optical signal 406.

The WDM HBFM 600 includes a demultiplexer 648 or DeMux 648. The DeMux 648 divides the optical signal 406 by its wavelengths λ₁-λₙ and provides an optical signal 406 of one wavelength λ_{#} to each of delay elements 629-1 through 629-n. Each delay element applies a fixed delay to the corresponding wavelength component of the optical signal 406. By dividing the optical signal 406 by wavelength prior to receiving the optical delay of the corresponding delay element 629-# each delay is applied only to the wavelength component of the optical signal 406 fed through the corresponding delay element.

In an example, the DeMux 648 divides the optical signal into fourteen wavelength components λ₁-λ₁₄. Wavelength component λ₁ is passed through a bypass and is not delayed. Wavelength components λ₂-λ₁₄ are passed through delay elements 629-1 through 629-n, respectively, where n is 13. Each delay element 629-# applies a delay whose value is a multiple of tau or # times tau. For example, where tau is 40 ps, delay element 629-1 applies a delay of 40ps and delay element 629-n applies a delay of 520 ps (or 13 times 40ps).

The WDM HBFM 600 includes a wavelength division multiplexer 649 or Mux 649. The Mux 649 recombines the wavelength components back into an optical signal 406. The optical signal 406 output from the Mux 649 includes a train of the wavelength components, each wavelength component carrying the RF signal 102 delayed by a specific value and offset relative to the remaining wavelength components.

The WDM HBFM 600 includes a splitter 650. The splitter 650 splits the delayed optical signal 406. It will be appreciated that each split optical signal 406 is a replica to the optical signal 406 and includes the range of wavelengths (i.e. the wavelength components) as it is split rather than divided.

The WDM HBFM 600 includes configurable PDs 640a through 640x. Each PD 640 is tunable or controllable across the spectrum for picking a specific wavelength of the optical signal 406 with the desired coarse delay. This control may be implemented by changing the center wavelength of the PD according to the desired wavelength/delay pair. Selecting the wavelength via a configurable PD 640 beneficially avoids switch voltage precision considerations in the switchable array 500 of Figure 5 and provides the selection function to the PD 640 which is an already present element. This beneficially further reduces the complexity of the WDM HBFM 600 over the switched array 500 of Figure 5.

The WDM HBFM 600 includes splitters 652a through 652x. Each splitter 652 corresponds to a PD 640. The splitters 652 further split the signal of each wavelength/delay pair.

The WDM HBFM 600 includes ABFs 530a-1 through 530a-n and corresponding array elements 506a-1 through 530a-n for applying a fine phase delay and transmitting the corresponding delayed signal.

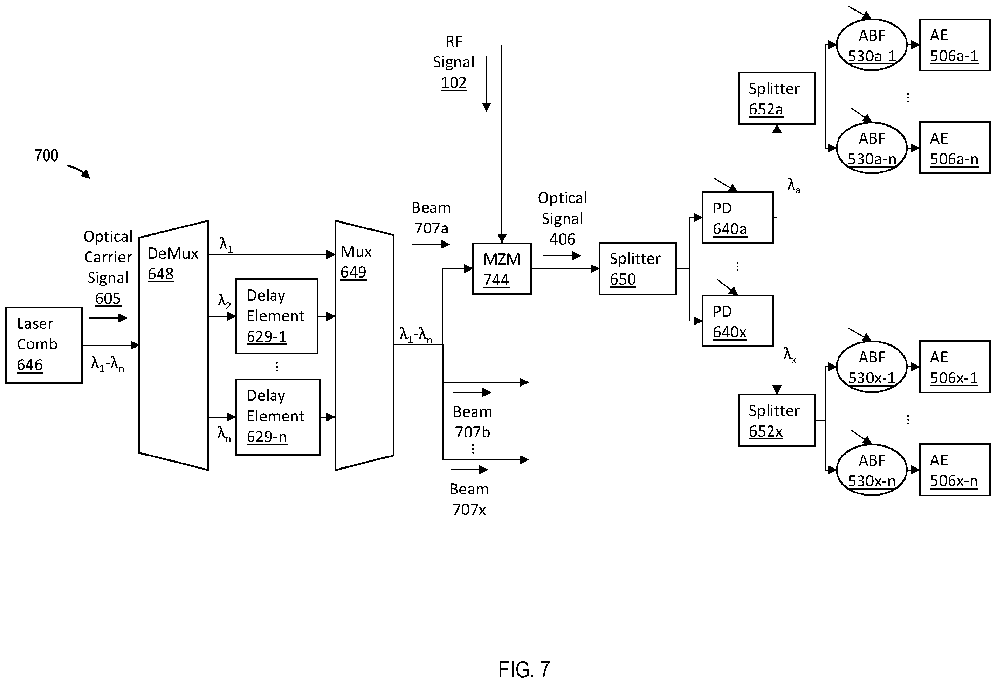

Referring now to Figure 7, shown therein is a block diagram of a multi-beam WDM HBFM 700, according to an embodiment.

The multi-beam WDM HBFM 700 is similarly configured to the WDM HBFM 600 of Figure 6. In the multi-beam WDM HBFM 700 the DeMux 648 receives the optical carrier signal 605 from the laser comb 646.

The Mux 649 outputs a signal with all wavelength components which are then split by a splitter (not shown) into multiple signals 707a through 707x. The signal 707 is an optical carrier signal including a train of the wavelength components λ₁-λₙ which are delayed by a delay corresponding to a delay element 629-1 through 629-n, respectively.

Multi-beam WDM HBFM 700 includes an MZM 744 configured similarly to the MZM 644 of Figure 6. The MZM 744 is disposed after and receives a beam 707 from the Mux 649. The optical signal 406 output from the MZM 744 includes the RF signal 106 the optical domain and carried by the modulated optical signal 707. As the wavelength components of the signal 707 are delayed, the wavelength components of the optical signal 406 are correspondingly delayed and a variable PD 640 can be tuned to select a wavelength component with a required delay.

Generating the signal 707 including a train of delayed wavelengths and splitting this signal 707 prior to modulation with the RF signal 102 enables the beam to be split for carrying different RF signals 102.

While the above description provides examples of one or more apparatus, methods, or systems, it will be appreciated that other apparatus, methods, or systems may be within the scope of the claims as interpreted by one of skill in the art.

## Claims

1. A hybrid beam forming network comprising:
an optical beam forming network, OBFN, configured to form a beam in the optical domain, the OBFN comprising an optical delay module configured to provide a true time delay, TTD, in the optical domain to an optical signal, modulated with an RF signal, and received by the OBFN to obtain a coarse delayed optical signal;
one or more optical to radio frequency, RF, demodulator units configured to demodulate the RF signal from the coarse delayed optical signal to obtain a coarse delayed RF signal; and
an analog beam forming network, ABFN, configured to form a plurality of phase-shifted signals and provide the phase-shifted signals to corresponding array elements of an array system, the ABFN comprising an analog delay module configured to provide at least one fine delay to the coarse delayed RF signal to obtain the phase-shifted signals.

2. The hybrid beam forming network of claim 1, further comprising an upstream splitter configured to split the optical signal, wherein the optical delay module comprises a plurality of delay lines, each delay line configured to receive a split optical signal output from the splitter and provide a TTD to the received split optical signal independently from TTD provided by the remaining delay lines.

3. The hybrid beam forming network according to either one of claims 1 and 2, wherein the optical delay module comprises a series of delay units, each delay unit configured to provide a fixed delay and comprising:
a delay element configured to receive the optical signal and provide a corresponding delay to the optical signal;
a bypass configured to bypass the delay element; and
a switch, wherein the switch:
in a delay configuration directs the optical signal through the corresponding delay element for providing the corresponding delay to the optical signal; and
in a bypass configuration directs the optical signal through the bypass for bypassing the corresponding delay element;
and wherein each switch is independently controllable for toggling between the delay and bypass configurations to affect a desired total delay of the series of delay units.

4. The hybrid beam forming network of claim 3 wherein each delay unit is a spiral delay unit.

5. The hybrid beam forming network of any preceding claim further comprising an optical conversion unit configured to convert a received RF signal into the optical domain to obtain the optical signal.

6. The hybrid beam forming network of claim 5, wherein the optical conversion unit comprises:
a laser source configured to provide an optical carrier signal to an optical modulator; and
the optical modulator configured to receive an input signal and modulate the optical carrier signal based on the input signal to obtain the optical signal, wherein the optical signal carries the input signal.

7. The hybrid beam forming network of claim 6, wherein the optical modulator comprises a Mach-Zehnder Modulator, MZM.

8. The hybrid beam forming network of any preceding claim, wherein at least one of the optical to RF demodulator units is a photodiode.

9. The hybrid beam forming network of any preceding claim, wherein the analog delay module comprises:
at least one downstream splitter configured to split the coarse delayed optical signal and the coarse delayed RF signal to obtain a plurality of split coarse delayed signals; and
a plurality of analog beam formers, each analog beam former configured to:
receive a split coarse delayed RF signal corresponding to one of the split coarse delayed signals; and
provide a desired fine phase-shift of the plurality of fine delays to the received split coarse delayed RF signal independently from the remaining analog beam formers wherein the analog beam former is variable to provide the desired fine phase-shift selected from a fine phase range of the analog beam former.

10. The hybrid network of claim 9, wherein at least one of the optical to RF demodulator units is communicatively disposed between the splitter and an analog beam former of the plurality of analog beam formers.

11. The hybrid beam forming network of any preceding claim, wherein the optical delay module comprises:
a demultiplexer configured to:
demultiplex a multi-wavelength optical signal comprising a plurality of wavelength components of a plurality of respective wavelengths into a plurality of respective optical signals each compromising of a single wavelength component; and
provide each of the plurality of optical signals to a respective delay element;
the delay elements configured to independently provide a TTD for each of the plurality of optical signals and
a multiplexer configured to multiplex the plurality of optical signals into a delayed multiplexed optical signal comprising each of the plurality of wavelength components delayed according to the corresponding TTD.

12. The hybrid beam forming network of claim 11, wherein at least one of the optical to RF demodulator units is variable for selecting one of the plurality of delayed wavelengths according to a desired TTD and configured to convert the wavelength component corresponding to the selected wavelength to the coarse delayed RF signal.

13. The hybrid beam forming network of either one of claims 11 to 12, further comprising an optical modulator configured to receive an input RF signal and the delayed multiplexed optical signal and modulate the delayed multiplexed optical signal based on the input signal to obtain the optical signal, wherein each delayed wavelength component carries the input signal.

14. The hybrid beam forming network of any one of claims 11 to 13, wherein each wavelength component of the multiplexed optical signal is modulated and carries an input signal.

15. A method of beam forming, comprising:
forming a beam in the optical domain with an optical beam forming network, OBFN, the forming including providing by an optical delay module a true time delay, TTD, in the optical domain to an optical signal received by the OBFN to obtain a coarse delayed optical signal;
converting the coarse delayed optical signal from the optical domain to the RF domain to obtain a coarse delayed RF signal; and
forming with an analog beamforming network, ABFN, a plurality of phase-shifted signals and providing the phase-shifted signals to corresponding array elements of an array system, the forming including providing by an analog delay module at least one fine delay to the coarse delayed analog signal to obtain the phase-shifted signals.
